# EUROPEAN PATENT SPECIFICATION

(11) **EP 2 306 769 B1**
(45) Date of publication and mention of the grant of the patent: **18.06.2014**
(21) Application number: 09290756.7
(22) Date of filing: 02.10.2009
(51) Int. Cl.: H04W 36/00, H04W 24/10, H04W 28/04, H04W 88/08

(54) **Handover in a wireless network with CoMP (coordinated multipoint) transmission/reception scheme**
Handover in einem drahtlosen Netzwerk mit CoMP Sende/Empfangs-Schema
Transfert intercellulaire dans un réseau sans fil avec un schéma de transmission/réception CoMP

(43) Date of publication of application: 06.04.2011
(73) Proprietor: Alcatel Lucent, 75007 Paris (FR)
(72) Inventor: Aydin, Osman, 70569 Stuttgart (DE); Kaminski, Stephen, 73054 Eislingen (DE); Ohm, Michael, 70372 Stuttgart (DE)
(74) Representative: Wetzel, Emmanuelle

(56) References cited:
- WO-A1-2007/143739
- WO-A1-2009/022976
- US-A1- 2008 267 127
- ETRI: "Multi-cell PMI coordination for downlink CoMP" 3GPP DRAFT; R1-093438 PMI COORDINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090819, 19 August 2009 (2009-08-19), XP050351716 [retrieved on 2009-08-19]
- LG Electronics: "R1-090782 - CoMP Configuration and UE/eNB Behaviours in LTE-advanced" 3GPP TSG RAN WG1 Meeting 56 3GPP TSG RAN WG1 Meeting 56R1-09078, 9 February 2009 (2009-02-09), pages 1-4, XP002572211 Retrieved from the Internet: URL:http://www.3gpp.org/FTP/tsg_ran/WG1_RL 1/TSGR1_56/Docs/> [retrieved on 2010-03-04]
- IEEE 802.16 BROADBAND WIRLESS ACCESS WORKING GROUP: "Neighbor BS coordination via MS" IEEE, PISCATAWAY, NJ, USA, 7 November 2007 (2007-11-07), XP040391425
- ALCATEL SHANGHAI BELL ET AL: "Collaborative MIMO for LTE-Advanced Downlink" 3GPP DRAFT; R1-082812_DL COLLABORATIVE MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), XP050316305 [retrieved on 2008-08-12]

## Description

### Background of the invention

Coordinated multipoint (CoMP) transmission/reception schemes are known from prior art. CoMP can be used in uplink or downlink and means simultaneous reception of transmission of a signal at multiple geographically separated reception or transmission points. A reception or transmission point typically refers to a cell of a radio base station. In downlink, a CoMP master typically decides about the beneficially involved CoMP slaves and distributes the information to be sent towards them. The CoMP master corresponds to a serving cell.

Wireless appliances, such as mobile phones, PDAs or portable computers, typically move through the coverage area of several cells of the wireless communication network. To stay connected to the wireless communication network, a handover procedure is defined for the non-CoMP case. During such a handover the serving cell of the wireless communication network is changed.

US 2008/0267127 A1 discloses a method and apparatus for handover In a wireless communication system. ETRI: "Multi-cell PNI coordination for downlink CoMP" (3GPP draft; R1-093438 PMI Coordination) discloses a coordinated scheduling scheme in a coordinated multipoint network based on multi-cell PMI coordination. "CoMP Configuratoin and UE/eNB Behaviours in LTE-advanced" (3GPP TSG RAN WG1 Meeting 56; R1-09078) by LG Electronics discloses some high-level conceptual candidates for downlink CoMP configurations in the scope of joint processing and coordinated scheduling and their relevant UE/eNB behaviors. "neighbour BS coordination via MS" (IEEE 802,16 Broadband Wireless Access Working Group) discloses a BS-BS coordination scheme via a mobile station. A mobile station is located within the overlapped coverage of neighboring base stations (BSs), who identify this MS for their coordination. "Collaborative MIMO for LTE-Advanced Downlink" (3GPP draft; R1-082812) by Alcatel Shanghai Bell et al discloses a joint MIMO transmission and reception between multiple coordinated BSs and a single MS or multiple MSs over the same radio resources.

### Summary of the Invention

Embodiments of the vention provide a method, base stations and a computer program for switching the control of a wireless connection of a wireless appliance.

It is an object of the invention to improve the downlink communication of a wireless appliance in a wireless communication network. For this purpose a first base station sends a first signal to at least one second base station, which is also part of the plurality of base stations of the wireless communication network. The first signal is indicative of an identifier of the wireless appliance, further physical layer related information identifying the time, frequency, modulation and coding of the measurement report transmission and of a measurement configuration of the wireless appliance.

Preferably, the information identifying the coding comprises information about encryption and the channel coding used for transmitting the measurement report. Although this is a preferred embodiment, in another embodiment the coding comprises only the encryption or the channel coding used for transmitting the measurement report.

The measurement configuration of the wireless appliance means for example the periodical time intervals in which measurements shall be performed by the wireless appliance. Further the measurement configuration may contain at least one threshold for at least one value measured by the wireless appliance. When this at least one value exceeds the threshold, a measurement report is sent to the first base station by at least one of the second slave base station. The at least one value can, for example, be a signal quality or a signal power.

Further, the first signal is indicative of an identifier of the wireless appliance. This means that by knowing the identifier of the wireless appliance, further physical layer related information identifying the time, frequency, modulation and coding of the measurement report transmission and the measurement configuration of the wireless appliance the second base station knows when measurements are sent by which wireless appliance to the first base station.

According to embodiments of the invention the first base station sends a second signal to the wireless appliance. This second signal is indicative of the measurement configuration of the wireless appliance. This means, the second signal comprises the same measurement configuration as the first signal, which was sent from the first base station to the at least one second base station. Thus, the at least one second base station knows about the measurement configuration of the wireless appliance.

The wireless appliance performs measurements and sends measurement reports of these measurements to the first base station according to the measurement configuration, which was transmitted to the wireless appliance from the first base station. The measurement reports comprise at least one first value. For example, this first value may be the signal quality and/or the signal power of the signal of the first base station. Additionally, a plurality of other values may be also comprised by the measurement report. These may be signal qualities and/or signal powers of other base stations.

The at least one second base station knows about the periodicity, when the wireless appliance sends the measurement report, and about the identifier of the wireless appliance, the at least one second base station can receive the measurement report of the wireless appliance. The at least one second base station is able to receive the measurement report although the measurement report was originally intended to be sent from the wireless appliance to the first base station only.

The at least one second base station comprises decoding means for decoding the received measurement report. The decoded measurement report is forwarded to the first base station by the at least one second base station. This is advantageous, because the first base station still receives the measurement report even if the measurement report cannot be received directly from the wireless appliance. This may be due to a sudden loss of connection of the wireless appliance. This may be the case when the user walks around a street corner or if an elevator door closes.

After having received the measurement report from the at least one second base station and/or from the wireless appliance, the first base station determines if a condition for switching the control of the wireless connection of the wireless appliance is fulfilled. This switching of control of the wireless connection of the wireless appliance is also called handover. Therefore, the latest received measurement report is used. The condition may for example be the excess of a threshold by a measurement value. In principle, the condition is similar to state of the art handover conditions.

If the condition for switching the control of the wireless connection of the wireless appliance is fulfilled, the first base station sends a third signal to the at least one second base station dedicated to be forwarded to the wireless appliance. The third signal is indicative for switching the control of the wireless connection of the wireless appliance from the first base station to another base station. The other base station may be identical with the at least one second base station although this is not mandatory.

The third signal received from the first base station is forwarded to the wireless appliance by the at least one second base station. This is advantageous because in case of loss of connection between the wireless appliance and the first base station the third signal is still transmitted to the wireless appliance. Thus, radio link failures are avoided.

Preferably, the above described method is performed in a CoMP downlink scheme. This CoMP downlink scheme may be applied for example in a GSM, UMTS or a LTE wireless communication network and the downlink coordinated multipoint transmission scheme may be already activated before the first method step is performed or it may be activated while performing the method according to embodiments of the invention.

Preferably at least two second base stations forward the third signal to the wireless appliance time synchronized in a CoMP transmission.

According to embodiments of the invention the second signal is sent to the wireless appliance from the first base station only. This is the case when, for example, the first and the at least one second base station are not yet transmitting data in a downlink coordinated multipoint (CoMP) scheme. Latest after this step the plurality of base stations has to be combined to a CoMP set. The CoMP set formed by the plurality of base stations may transmit data to the wireless appliance only in downlink or in downlink and uplink. The uplink is independent from the downlink.

According to embodiments of the invention the at least one second base station transmits the decoded measurement report to the first base station only if the first value of the measurement report is above a first threshold. This means that not every decoded measurement report is forwarded to the first base station but only the measurement reports which could be indicative for switching the control of the connection of the wireless appliance. Preferably, the first threshold is identical with the condition for switching the control of the wireless connection of the wireless appliance.

According to embodiments of the invention the measurement configuration comprises a periodicity of measurements performed by the wireless appliance. The periodicity indicates the time intervals when the wireless appliance shall perform measurements and send measurement reports.

According to embodiments of the invention the measurement configuration sent to the wireless appliance comprises at least one second threshold. Preferably, the second threshold is identical to the first threshold and to the condition for switching the control of the wireless connection of the wireless appliance.

According to embodiments of the invention the wireless appliance sends a measurement report to the first base station if at least one second value of the measurement report is above the at least one second threshold. It is to be noted that also a plurality of values can be above the at least one second threshold. For example, the second threshold is a signal quality threshold and the second value is a signal quality of at least one of the plurality of base stations. This is advantageous because the wireless appliance sends a measurement report to the first base station when the signal quality for example of a signal of another base station exceeds the threshold and a switching of the control of the wireless connection could improve the connection of the wireless appliance with the wireless communication network.

According to embodiments of the invention the at least one first and the at least one second thresholds are signal quality thresholds and that at least one first and the at least one second values are signal qualities of at least one of the plurality of base stations. It is to be noted that a measurement report is also forwarded by a second base station to the first base station if a value in the measurement report, which is not related to the second base station forwarding the measurement report, exceeds the threshold. This means a handover to a third base station can be initiated by the first base station based on a measurement report received by a second base station.

According to embodiments of the invention the at least one first and the at least one second thresholds are signal power thresholds and the at least one first and second values are the signal powers of at least one of the plurality of base stations.

In another aspect the invention relates to a computer program product comprising machine executable instructions for performing a method as described above.

In yet another aspect the invention relates to a base station apparatus in a wireless communication network, the base station apparatus being able to perform method steps as described above. Therefore, the base station apparatus comprises means for sending a first signal to at least one other base station apparatus of the wireless communication network.

Further, the base station apparatus comprises means for sending a second signal to the wireless appliance.

Furthermore, the base station apparatus comprises means for receiving measurement reports from the wireless appliance according to the measurement configuration. And the base station apparatus comprises means for receiving measurement reports from the at least one other base station apparatus.

Additionally the base station apparatus comprises means for determining if a condition for switching the control of the wireless connection of the wireless appliance is fulfilled. This determination is based on the received measurement report and can, for example be performed in a processor by a program.

The base station apparatus comprises means for sending a third signal to the at least one other base station apparatus and to the wireless appliance. The third signal is indicative for switching the control of the wireless connection of the wireless appliance from the base station apparatus to one of the at least one other base station apparatus.

In yet another aspect the invention relates to another base station apparatus in a wireless communication network. The base station apparatus comprises means for receiving measurement reports being sent from a wireless appliance to another base station apparatus using an identifier, further physical layer related information identifying the time, frequency, modulation and coding of the measurement report transmission and a measurement configuration of the wireless appliance. The identifier, further physical layer related information identifying the time, frequency, modulation and coding of the measurement report transmission and the measurement configuration of the wireless appliance have been received from another base station apparatus.

Preferably, the information identifying the coding comprises information about encryption and the channel coding used for transmitting the measurement report. Although this is a preferred embodiment, in another embodiment the coding comprises only the encryption or the channel coding used for transmitting the measurement report.

Further the base station apparatus comprises means for decoding the measurement reports and means for forwarding the measurement reports to the other base station apparatus.

Further, the base station apparatus comprises means for sending a third signal to the wireless appliance.

### Brief description of the drawings

In the following preferred embodiments of the invention will be described, by way of example only, and with reference to the drawings in which:
- Fig. 1: is a schematic view of a wireless communication network illustrating communication between base stations;
- Fig. 2: is a schematic view of a wireless communication network illustrating the communication between the plurality of base stations and the wire- less appliance before handover;
- Fig. 3: is a schematic view of a wireless communication network illustrating measurement reporting of the wireless appliance before handover;
- Fig. 4: is a schematic view of a wireless communication network illustrating triggered measurement reporting;
- Fig. 5: is a schematic view of a wireless communication network illustrating communication between COMP master and COMP slaves before handover;
- Fig. 6: is a schematic view of a wireless communication network illustrating communication before handover between the plurality of base stations and the wireless appliance;
- Fig. 7: is a schematic view of a wireless communication network illustrating the handover procedure;
- Figs. 8a-8b: are an overview of the communication between the wireless appliance and the base stations; and
- Fig. 9: a block diagram of two base station apparatuses and a wireless appliance.

### Detailed description

Like numbered elements in these figs. are either identical elements or perform the same function. Elements which have been discussed previously will not necessarily be discussed in later figs. if the function is identical.

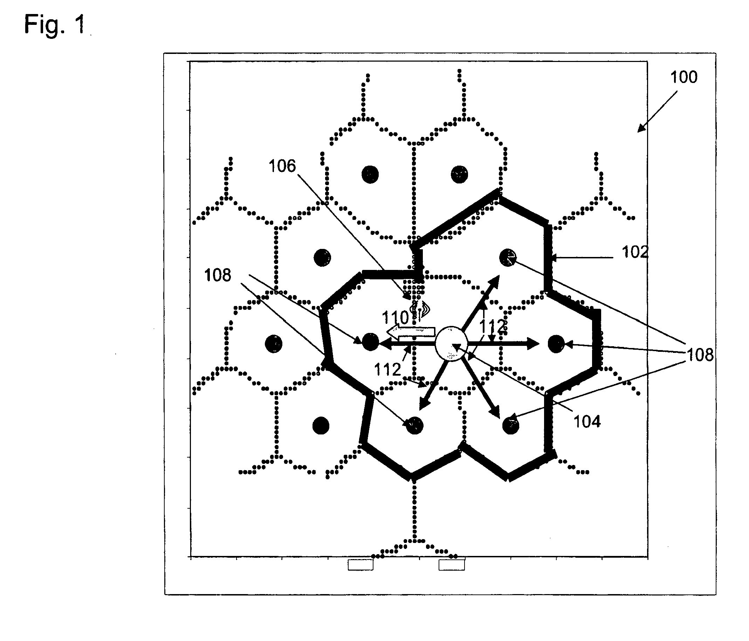

Fig. 1 illustrates the situation in a wireless communication network 100 with a plurality of base stations forming a coordinated multipoint (CoMP) cooperating set 102. A first base station 104 of the CoMP set 102 controls the connection of a wireless appliance 106 and functions as a CoMP master of the CoMP set 102. The CoMP set 102 comprises the CoMP master 104 and a plurality of CoMP slaves 108. The CoMP cell is formed by the cells served by the CoMP master 104 and the CoMP slaves 108.

The wireless appliance 106 is located in the border region of the cell associated to the CoMP master 104 and a cell associated to a CoMP slave 108. The wireless appliance 106 is moved towards the cell of the CoMP slave 108 in direction 110.

The CoMP master 104 sends a signal 112 to every other base station 108 in the CoMP set 102. The signal 112 comprises the measurement configuration. The measurement configuration can for example comprise a reporting periodicity and a handover event threshold. The reporting periodicity and the handover event threshold define when the CoMP slave 108 shall try to receive and forward a measurement report from the wireless appliance 106 to the CoMP master 104. Further, the signal 112 comprises the identifier, further physical layer related information identifying the time, frequency, modulation and coding of the measurement report transmission of the wireless appliance 106. By knowing the measurement configuration, comprising the reporting periodicity, further physical layer related information identifying the time, frequency, modulation and coding of the measurement report transmission and the identifier of the wireless appliance 106 the CoMP slaves 108 are able to receive signals from the wireless appliance directed to the CoMP master 104.

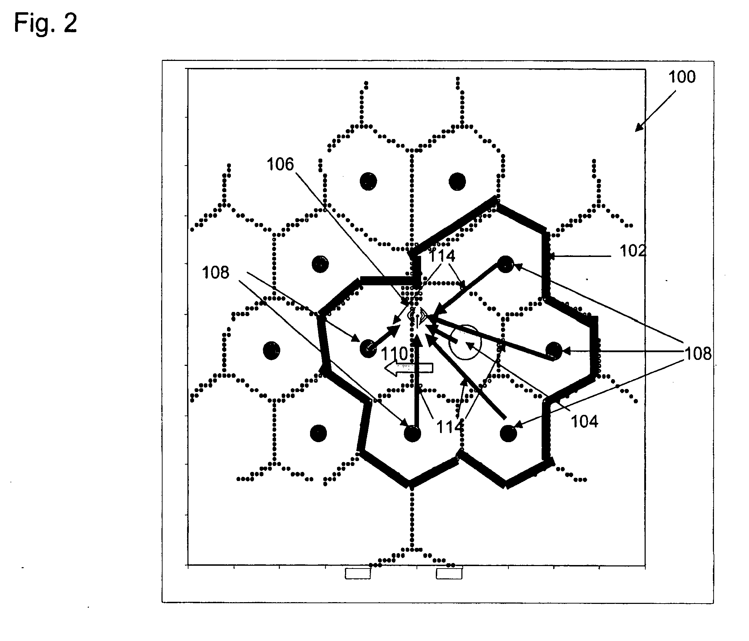

Fig. 2 shows the same wireless communication network 100 as fig. 1 with the CoMP set 102 comprising the CoMP master 104, the wireless appliance 106 and the CoMP slaves 108. The wireless appliance 106 is moved further in direction 110. Downlink data and/or signaling 114 is sent from the CoMP master 104 and the CoMP slave 108 towards the wireless appliance 106. Sending downlink data 114 towards the wireless appliance 106 from the CoMP master 104 and the CoMP slaves 108 is an essential feature of the CoMP downlink set 102. The CoMP downlink can be established independently from the CoMP uplink. This means, the same CoMP set could be established for the CoMP uplink or a different CoMP set could be established for the CoMP uplink or no CoMP uplink set is established.

The downlink signaling 114 comprises the measurement configuration and the handover event threshold. The measurement configuration comprises for example the reporting periodicity. Thus, the wireless appliance 106 is instructed from the plurality of base stations comprising the master 104 and the slaves 108 to report measurements in a certain periodicity and to report measurements when the handover event threshold is exceeded.

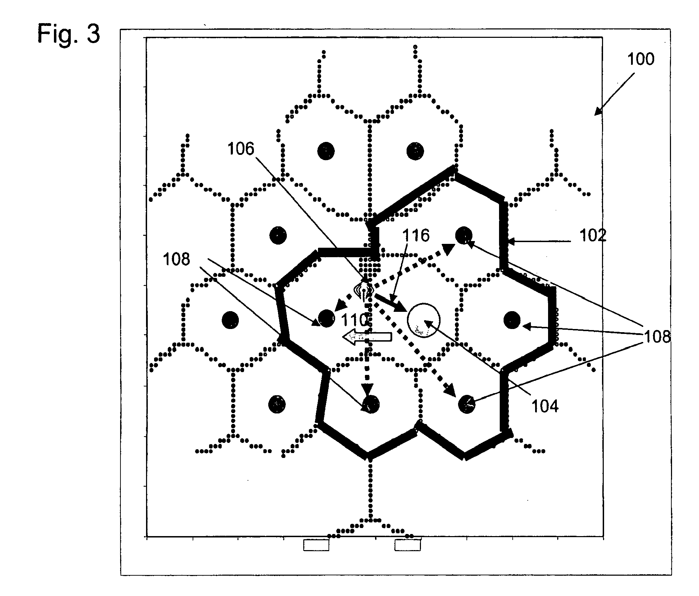

Fig. 3 shows the wireless communication network 100 with the CoMP set 102, the CoMP master 104, the wireless appliance 106 and the CoMP slaves 108. Wireless appliance 106 is moved further in direction 110.

Wireless appliance 106 sends a measurement report 116 towards the CoMP master 104. The measurement report 116 can be sent because the handover event threshold is exceeded or because of a periodical measurement reporting based on the measurement configuration.

The measurement report 116 is sent from the wireless appliance 106 to the CoMP master 104. Because the CoMP slaves 108 know of the identifier and further physical layer related information identifying the time, frequency, modulation and coding of the measurement report transmission and of the measurement configuration of the wireless appliance 106 , the CoMP slaves 108 are able to receive the measurement report 116 directed from the wireless appliance 106 to the CoMP master 104. The measurement report 116 comprises for example the signal quality and/or the signal power of a plurality of base stations measured by the wireless appliance 106. For example, the signal quality and/or the signal power of a CoMP slave 108 near the wireless appliance 106 can be better and/or higher than the signal quality and/or the signal power of the CoMP master 104. This can be indicative for initiating a handover procedure. The handover procedure is always initiated by the CoMP master 104 based on measurement reports 116 from the wireless appliance 106. The measurement reports 116 from the wireless appliance 106 are forwarded by the CoMP slaves 108 towards the CoMP master 104. Thus, the master receives the measurement report directly from the wireless appliance 106 and/or from the CoMP slaves 108. This is advantageous because the measurement report 116 is received by the CoMP master 104 even if the wireless communication connection to the wireless appliance 106 is cut off.

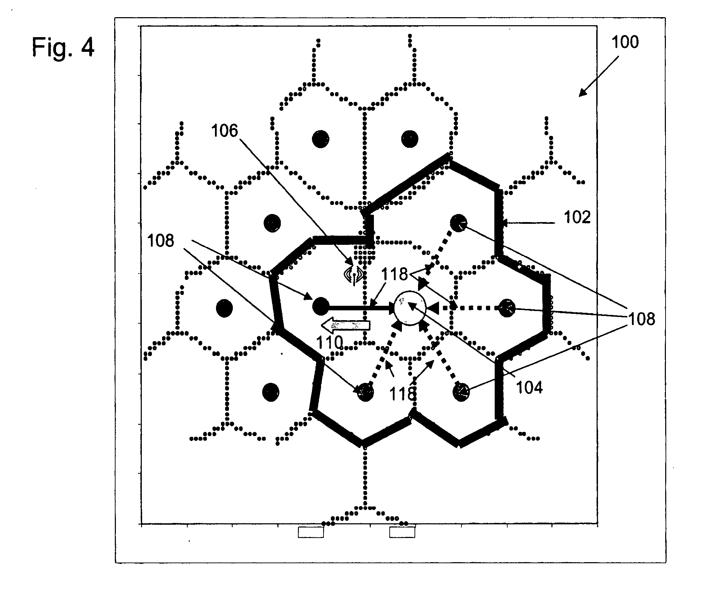

Fig. 4 shows the wireless communication network 100 with the CoMP set 102, the CoMP master 104, the wireless appliance 106 and the CoMP slaves 108. The wireless appliance 106 is moved further in direction 110. After having received the measurement report, the slaves 108 forward the measurement report 118 including the measurement report received from the wireless appliance 106 to the CoMP master 104. The values in the measurement report 118 correspond to the values of the measurement report received from the wireless appliance 106. Because of another way of transmission, e.g. via an X2 interface, the raw data may be different. This step is triggered because at least one value in the measurement report exceeded a threshold. This threshold can be for example a signal quality threshold or a signal power threshold. If a measured value in the measurement report exceeds a threshold the measurement report 118 is forwarded to the CoMP master 104 from the CoMP slaves 108. Based on the measurement report 118 the CoMP master 104 decides if a handover shall be performed or not. The measurement report 118 can be transmitted from the CoMP slave 108 with the better signal quality and/or signal power and additionally from every other CoMP slave 108 having received the measurement report118. By this procedure the transmission of the measurement report 118 including the measurement report towards the CoMP master 104 is assured.

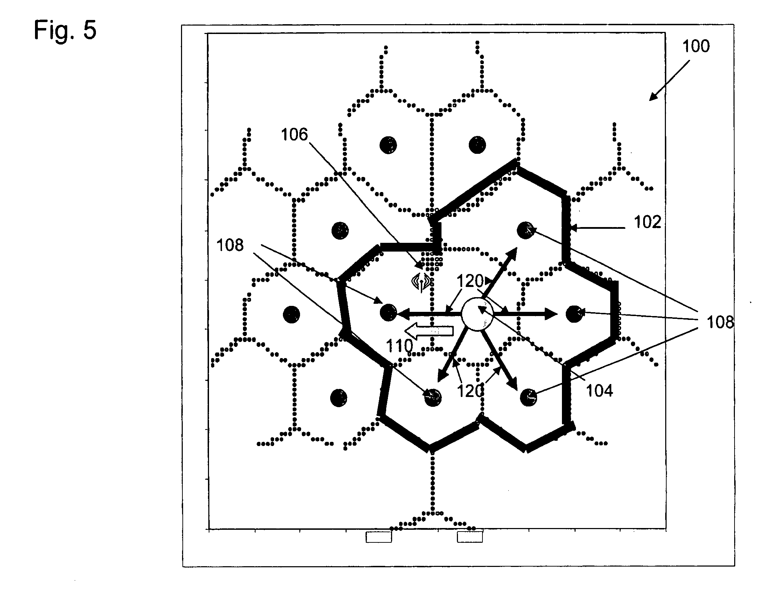

Fig. 5 shows the wireless communication network 100 with the CoMP set 102, the CoMP master 104, the wireless appliance 106 and the CoMP slaves 108. The wireless appliance 106 is moved further in direction 110. Based on the measurement reports received by the CoMP master 104, the CoMP master decides to perform a handover of the wireless appliance 106 towards a CoMP slave 108. A handover procedure is initiated according to 3GPP standards by transmitting a RRC connection reconfiguration signal 120. Thus, the CoMP master 104 transmits a RRC connection reconfiguration signal 120 to all CoMP slaves 108 in the CoMP set 102. The RRC connection reconfiguration signal 120 is sent to all CoMP slaves 108 because every slave 108 shall forward the RRC connection reconfiguration message 120 to the wireless appliance 106. By distributing the RRC connection reconfiguration message 120 to a plurality of base stations, the CoMP master informs the base stations of the CoMP set 102 of the connection reconfiguration.

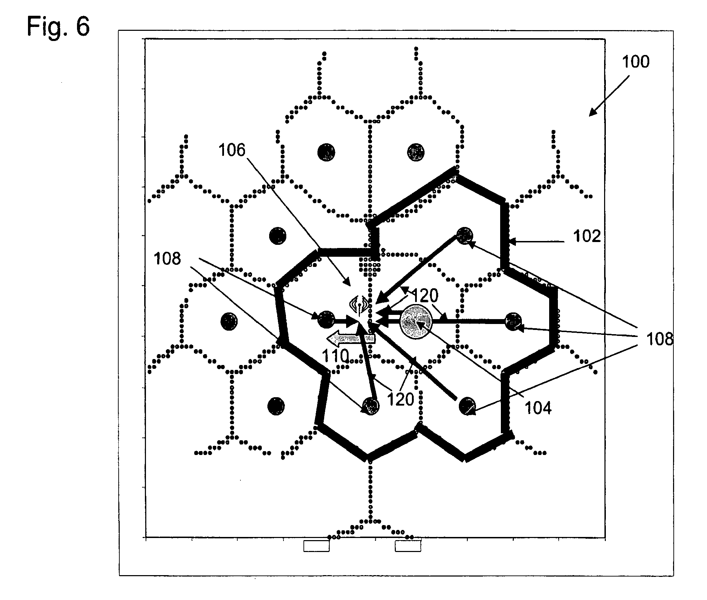

Fig. 6 shows the wireless communication network with the CoMP set 102, the CoMP master 104, the wireless appliance 106 and the CoMP slaves 108. The wireless appliance 106 is moved further in direction 110. The CoMP master 104 transmits the RRC connection reconfiguration signal 120 to the wireless appliance 106. Synchronized in time, the CoMP slaves 108 transmit the RRC connection reconfiguration signal 120 to the wireless appliance 106. Thus, the RRC connection reconfiguration signal 120 is received by the wireless appliance 106 even if the connection to the CoMP master 104 is interrupted. Thereby, radio link failures are avoided.

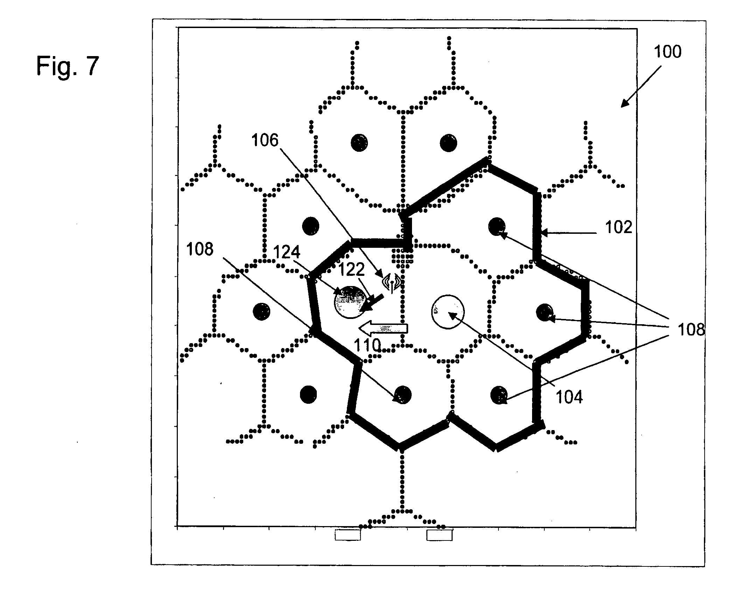

Fig. 7 shows the wireless communication network 100 with the CoMP set 102, the CoMP master 104, the wireless appliance 106 and the CoMP slaves 108. The wireless appliance 106 is moved further in direction 110. After having received the RRC connection reconfiguration signal the wireless appliance 106 transmits a RRC connection reconfiguration complete signal 122 to the CoMP base station 124, which is the base station to which the handover was performed. Thus, base station 124 is the new CoMP master and a new CoMP set can be established. The new CoMP downlink master 124 can be selected independently of an eventually existing CoMP uplink master.

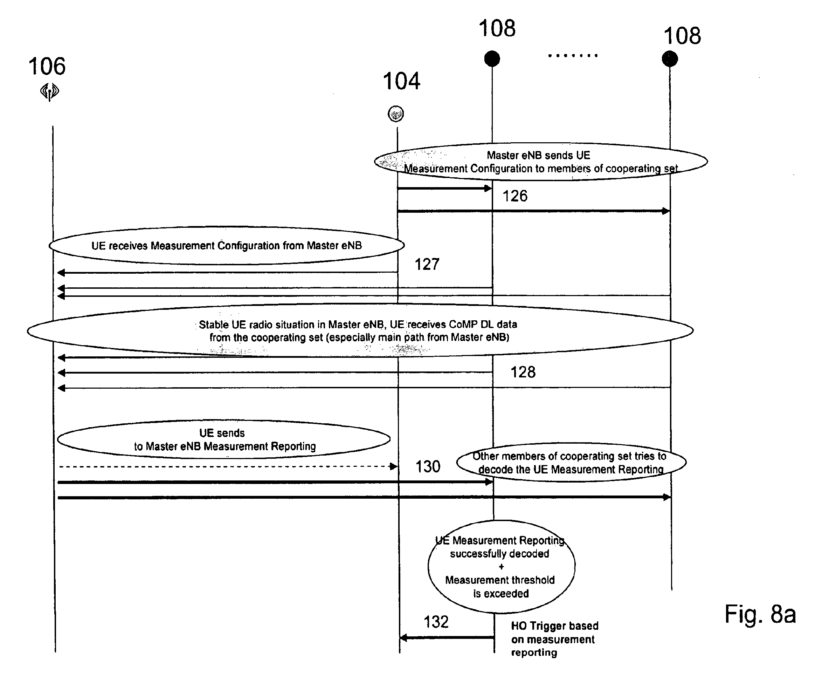

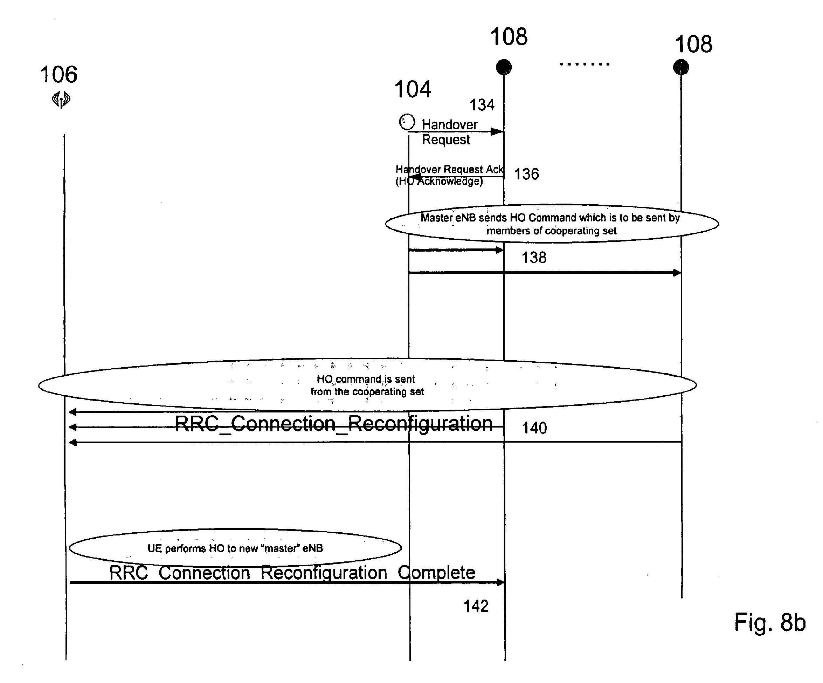

Fig. 8 is divided into two fig. parts, fig. 8a and 8b. Figs. 8a and 8b show the signals sent between the CoMP master 104, the wireless appliance 106 and the CoMP slaves 108. Throughout fig. 8 the wireless appliance 106 may also be described as a UE, which means user equipment.

Signal 126 is sent from CoMP master 104 to CoMP slaves 108 and comprises the measurement configuration and further physical layer related information identifying the time, frequency, modulation and coding of the measurement report transmission. The measurement configuration defines the periodicity of performing measurements by the wireless appliance 106. The signal 126 may also comprise a handover event threshold. The handover event threshold is the trigger for transmitting a received measurement report to the CoMP master 104 by the CoMP slaves 108.

With signal 127 the wireless appliance 106 receives from the CoMP master 104 and the CoMP slaves 108 the measurement configuration. The measurement configuration comprises a periodicity for reporting measurements.

In the next step, signals 128 are transmitted from the CoMP master 104 and the CoMP slaves 108 to the wireless appliance 106. These signals 128 comprise the downlink data transmitted to the wireless appliance 106.

Because of the measurement configuration the mobile device 106 sends a signal 130 to the CoMP master 104 comprising the measurement report. The CoMP slaves 108 also receive the measurement report 130 because the CoMP slaves 108 know the identifier of the wireless appliance 106 and the periodicity of the measurement reports. After having received the measurement report 130 the CoMP slaves 108 decode the measurement report.

After having decoded the measurement report, the CoMP slaves 108 compare the measurement values to the handover event threshold. If for example the measurement value is a signal quality and the signal quality exceeds a signal quality threshold the measurement report 132 is forwarded to the CoMP master 104.

In fig. 8b a handover request 134 is transmitted from the CoMP master 104 to one of the CoMP slaves 108. The handover request 134 is transmitted because of a fulfilled handover criterion, determined by the CoMP master. The handover criterion can be a measurement value of the measurement report and/or other events related to the connection of the CoMP master 104 with the wireless appliance 106. This can, for example, be the loss of data connection and/or signaled reception acknowledgements.

The CoMP slave having received the handover request 134 transmits a handover request acknowledgement signal 136 to the CoMP master 104.

The CoMP master 104 sends a signal 138 to the CoMP slaves 108 comprising the handover command. Thus, the whole cooperating multipoint set knows which CoMP slave 108 is the future CoMP master. Then, the whole CoMP set sends the handover command to the wireless appliance 106. The CoMP set comprises the CoMP master 104, the future CoMP master 108 and the other slaves 108. The handover command is denoted as RRC connection reconfiguration signal 140.

After having received the handover command, the wireless appliance 106 performs the handover to the new CoMP master 108. Therefore a RRC connection reconfiguration complete signal 142 is sent from the wireless appliance 106 to the new CoMP master 108.

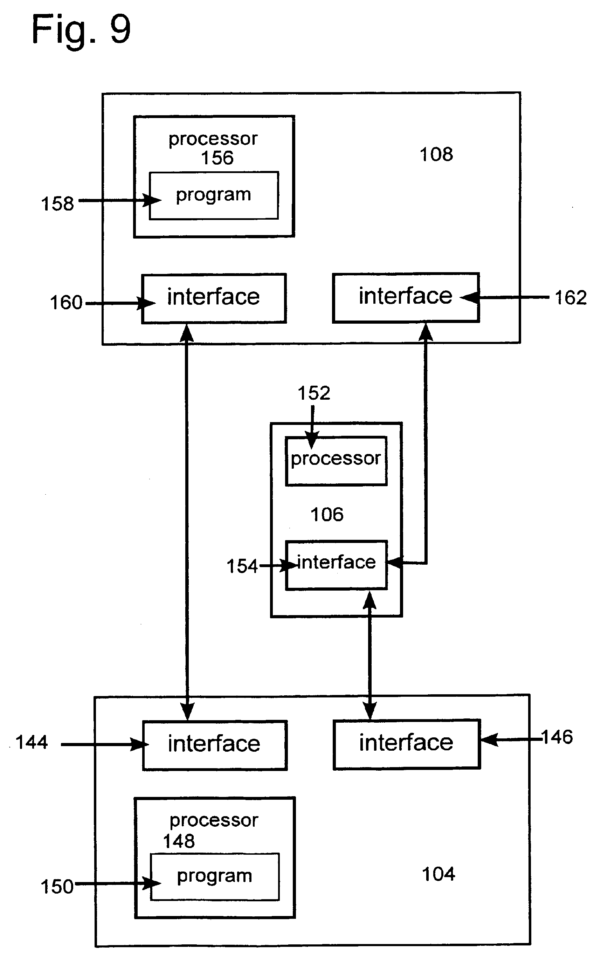

Fig. 9 is a schematic view of a CoMP master 104, a CoMP slave 108 and a wireless appliance 106. The CoMP master 104 is adapted to send signals to the CoMP slave 108 via interface 144. Further the CoMP master 104 is adapted to send signals to the wireless appliance 106 via interface 146. Via the same interface 146 signals can be received from the wireless appliance 106, while signals from the CoMP slave 108 are received via interface 144. Further, the CoMP master 104 comprises a processor 148, which is adapted to execute a program 150. The program can, for example, determine if a certain handover criterion is fulfilled.

The wireless appliance comprises a processor 152 and an interface 154 for communicating with the CoMP master 104 and the CoMP slave 108.

CoMP slave 108 comprises a processor 156 which is adapted to execute a program 158 and two interfaces 160 and 162 to communicate with the CoMP master 104 and the wireless appliance 106. The processor may, for example, decode the received measurement reports.

The interfaces 144 and 160 may, for example, be the X2 interface, defined in 3GPP.

In operation, the CoMP master 104 controls the wireless communication connection of the wireless appliance 106. Additionally, the CoMP master 104 is adapted to perform procedures as described above by executing program 150. Program 150 is adapted to perform the procedures that are described above as being performed by the CoMP master 104.

In operation, the CoMP slave 108 is part of a CoMP downlink set for wireless appliance 106, wherein the CoMP downlink set is controlled by CoMP master 104. Additionally, the CoMP slave 108 is adapted to perform procedures as described above by executing program 158. Program 158 is adapted to perform the procedures that are described above as being performed by the CoMP slave 108.

**List of reference numerals**

| | |
|---|---|
| 100 | Wireless communication network |
| 102 | CoMP set |
| 104 | CoMP master |
| 106 | Wireless appliance |
| 108 | CoMP slave |
| 110 | Mobility direction |
| 112 | Signal |
| 114 | Downlink data and/or signaling |
| 116 | Measurement report |
| 118 | Measurement report |
| 120 | RRC connection reconfiguration signal |
| 122 | RRC connection reconfiguration complete signal |
| 124 | New master |
| 126 | Signal |
| 128 | Signal |
| 130 | Signal |
| 132 | Measurement report |
| 134 | Handover request |
| 136 | Handover acknowledgement |
| 138 | Signal |
| 140 | RRC connection reconfiguration signal |
| 142 | RRC connection reconfiguration complete signal |
| 144 | Interface |
| 146 | Interface |
| 148 | Processor |
| 150 | Program |
| 152 | Processor |
| 154 | Interface |
| 156 | Processor |
| 158 | program |
| 160 | Interface |
| 162 | Interface |

## Claims

1. A method for switching the control of a wireless connection of a wireless appliance (106), wherein a plurality of base stations (104; 108) of a wireless communication network (100) comprises a first base station (104) and at least one second base station (108), the first base station controlling the wireless connection of the wireless appliance, wherein the method comprises:
- sending a first signal (126) to the at least one second base station of the wireless communication network from the first base station, the first signal being indicative of an identifier of the wireless appliance, a measurement configuration of the wireless appliance, and further physical layer related information identifying the time, frequency, modulation and coding of the measurement report transmission;
- sending a second signal (127) to the wireless appliance from at least the first base station, the second signal being indicative of the measurement configuration of the wireless appliance;
- performing measurements and sending measurement reports (116) from the wireless appliance to the first base station according to the measurement configuration, the measurement reports comprising at least one first value;
- receiving the measurement reports from the wireless appliance by the at least one second base station using the identifier, the measurement configuration of the wireless appliance, and further physical layer related information identifying the time, frequency, modulation and coding of the measurement report transmission;
- decoding measurement reports sent from the wireless appliance to the first base station by the at least one second base station;
- forwarding the decoded measurement reports (118) received by the at least one second base station to the first base station;
- determining if a condition for switching the control of the wireless connection of the wireless appliance is fulfilled using the measurement report by the first base station;
- sending a third signal (138) from the first base station to the at least one second base station and to the wireless appliance, the third signal being indicative for switching the control of the wireless connection of the wireless appliance from the first base station to the second base station or another base station, if the condition for switching the control of the wireless connection of the wireless appliance is fulfilled; and
- forwarding the third signal received from the first base station by the at least one second base station to the wireless appliance.

2. The method of claim 1, wherein the second signal is sent to the wireless appliance from the first base station and from the at least one second base station.

3. The method of any one of the preceding claims, wherein the at least one second base station transmits the decoded measurement report to the first base station, only if the first value of the measurement report is above a first threshold.

4. The method of any one of the preceding claims, wherein the measurement configuration comprises a periodicity of measurements performed by the wireless appliance.

5. The method of any one of the preceding claims, wherein the measurement configuration comprises at least one second threshold.

6. The method of claim 5, wherein the wireless appliance performs a measurement and sends a measurement report to the first base station, If at least one second value of the measurement report is above the at least one second threshold.

7. The method of claim 6, wherein the at least one first and the at least one second thresholds are signal quality thresholds and the at least one first and the at least one second values are signal qualities of at least one of the plurality of base stations.

8. The method of claim 6, wherein the at least one first and the at least one second thresholds are signal power thresholds and the at least one first and second values are the signal powers of at least one of the plurality of base stations,

9. A computer program product comprising machine executable instructions for performing the method of any one of claims 1 through 8 on a base station.

10. A base station apparatus in a wireless communication network, the base station apparatus comprising:
- means (144) for sending a first signal to at least one second base station apparatus of the wireless communication network, the first signal being indicative of an identifier of a wireless appliance of the wireless communication network, the first signal being indicative of further physical layer related information identifying the time, frequency, modulation and coding of the measurement report transmission and the first signal being indicative of a measurement configuration of the wireless appliance;
- means (146) for sending a second signal to the wireless appliance, the second signal being indicative of the measurement configuration of the wireless appliance;
- means (146) for receiving measurement reports from the wireless appliance according to the measurement configuration, the measurement reports comprising at least one first value;
- means (144) for receiving decoded measurement reports, that have been received from the wireless appliance by the at least one second base station apparatus, from the at least one second base station apparatus using the identifier, the measurement configuration of the wireless appliance, and the further physical layer related information identifying the time, frequency, modulation and coding of the measurement report transmission;
- means (148) for determining if a condition for switching the control of the wireless connection of the wireless appliance is fulfilled using the measurement report; and
- means (144) for sending a third signal to the at least one second base station apparatus and to the wireless appliance, the third signal being indicative for switching the control of the wireless connection of the wireless appliance from the base station apparatus to one of the at least one second base station apparatus, if the condition for switching the control of the wireless connection of the wireless appliance is fulfilled.

11. A base station apparatus in a wireless communication network, the base station apparatus comprising:
- means (160) for receiving a first signal from at least one first base station apparatus of the wireless communication network, the first signal being indicative of an identifier of a wireless appliance of the wireless communication network and the first signal being indicative of further physical layer related information identifying the time, frequency, modulation and coding of the measurement report transmission the first signal being indicative of a measurement configuration of the wireless appliance
- means (146) for receiving measurement reports being sent from a wireless appliance to the first base station apparatus using an identifier, a measurement configuration of the wireless appliance, and further physical layer related information identifying the time, frequency, modulation and coding of the measurement report transmission;
- means (156) for decoding the measurement reports;
- means (160) for forwarding the decoded measurement reports to the first base station apparatus;
- means (160) for receiving a third signal (138) from the first base station apparatus, the third signal being indicative for switching the control of the wireless connection of the wireless appliance from the first base station apparatus to the second base station apparatus or another base station, if a condition for switching the control of the wireless connection of the wireless appliance is fulfilled;
- means (146) for forwarding the third signal to the wireless appliance.

## Patentansprüche

1. Verfahren zum Umschalten der Steuerung einer drahtlosen Verbindung eines drahtlosen Geräts (106), wobei eine Vielzahl von Basisstation (104, 108) eines drahtlosen Kommunikationsnetzwerks (100) eine erste Basisstation (104) und mindestens eine zweite Basisstation (108) umfasst, wobei die erste Basisstation die drahtlose Verbindung des drahtlosen Geräts steuert, wobei das Verfahren umfasst:
- Senden eines ersten Signals (126) von der ersten Basisstation an die mindestens eine zweite Basisstation des drahtlosen Kommunikationsnetzwerks, wobei das erste Signal für eine Kennung eines drahtlosen Geräts, eine Messkonfiguration des drahtlosen Geräts sowie für weitere auf die Bitübertragungsschicht bezogene Informationen, welche die Zeit, die Frequenz, die Modulation und die Codierung der Messberichtsübertragung identifizieren, indikativ ist;
- Senden eines zweiten Signals (127) von mindestens der ersten Basisstation an das drahtlose Gerät, wobei das zweite Signal für die Messkonfiguration des drahtlosen Geräts indikativ ist;
- Durchführen von Messungen und Senden der Messberichte (116) von dem drahtlosen Gerät an die erste Basisstation gemäß der Messkonfiguration, wobei die Messberichte zumindest einen ersten Wert umfassen;
- Empfangen der Messberichte von dem drahtlosen Gerät an der mindestens einen zweiten Basisstation unter Verwendung der Kennung, der Messkonfiguration des drahtlosen Geräts sowie weiterer auf die Bitübertragungsschicht bezogene Informationen, welche die Zeit, die Frequenz, die Modulation und die Codierung der Messberichtsübertragung identifizieren;
- Decodieren der von dem drahtlosen Gerät an die erste Basisstation gesendeten Messberichte durch die mindestens eine zweite Basisstation;
- Weiterleiten der an der mindestens einen zweiten Basisstation empfangenen decodierten Messberichte (118) an die erste Basisstation;
- Vermitteln, unter Verwendung des Messberichts, ob eine Bedingung für das Umschalten der Steuerung der drahtlosen Verbindung des drahtlosen Geräts erfüllt ist, durch die erste Basisstation;
- Senden eines dritten Signals (138) von der ersten Basisstation an die mindestens eine zweite Basisstation und an das drahtlose Gerät, wobei das dritte Signal für das Umschalten der Steuerung der drahtlosen Verbindung des drahtlosen Geräts von der ersten Basisstation zu der zweiten Basisstation oder einer anderen Basisstation, wenn die Bedingung für das Umschalten der Steuerung der drahtlosen Verbindung des drahtlosen Geräts erfüllt ist, indikativ ist; und
- Weiterleiten des von der ersten Basisstation empfangenen dritten Signals durch die mindestens eine zweite Basisstation an das drahtlose Gerät.

2. Verfahren nach Anspruch 1, wobei das zweite Signal von der ersten Basisstation und von der mindestens einen zweiten Basisstation an das drahtlose Gerät gesendet wird.

3. Verfahren nach einem beliebigen der vorstehenden Ansprüche, wobei die mindestens eine zweite Basisstation den decodierten Messbericht nur dann an die erste Basisstation überträgt, wenn der erste Wert des Messberichts einen ersten Grenzwert überschreitet.

4. Verfahren nach einem beliebigen der vorstehenden Ansprüche, wobei die Messkonfiguration eine Periodizität der von dem drahtlosen Gerät durchgeführten Messungen umfasst.

5. Verfahren nach einem beliebigen der vorstehenden Ansprüche, wobei die Messkonfiguration mindestens einen zweiten Grenzwert umfasst.

6. Verfahren nach Anspruch 5, wobei das drahtlose Gerät eine Messung durchführt und einen Messbericht an die erste Basisstation sendet, wenn mindestens ein zweiter Wert des Messberichts den mindestens einen zweiten Grenzwert überschreitet.

7. Verfahren nach Anspruch 6, wobei der mindestens eine erste und der mindestens eine zweite Grenzwert Signalqualitäts-Grenzwerte sind, und wobei der mindestens eine erste und der mindestens eine zweite Wert Signalqualitäten mindestens einer der Vielzahl von Basisstationen sind.

8. Verfahren nach Anspruch 6, wobei der mindestens eine erste und der mindestens eine zweite Grenzwert Signalleistungs-Grenzwerte sind, und wobei der mindestens eine erste und der mindestens eine zweite Wert die Signalleistungen mindestens einer der Vielzahl von Basisstationen sind.

9. Computerprogramm-Produkt mit maschinenausführbaren Befehlen zur Durchführung des Verfahrens gemäß einem beliebigen der Ansprüche 1 bis 8 auf einer Basisstation.

10. Basisstationsvorrichtung in einem drahtlosen Kommunikationsnetzwerk, wobei die Basisstationsvorrichtung umfasst:
- Mittel (144) zum Senden eines ersten Signals an die mindestens eine zweite Basisstation des drahtlosen Kommunikationsnetzwerks, wobei das erste Signal für eine Kennung eines drahtlosen Geräts des drahtlosen Kommunikationsnetzwerks indikativ ist, wobei das erste Signal für weitere auf die Bitübertragungsschicht bezogene Informationen, welche die Zeit, die Frequenz, die Modulation und die Codierung der Messberichtsübertragung identifizieren, indikativ ist, und wobei das erste Signal für die Messkonfiguration des drahtlosen Geräts indikativ ist;
- Mittel (146) zum Senden eines zweiten Signals an das drahtlose Gerät, wobei das zweite Signal für die Messkonfiguration des drahtlosen Geräts indikativ ist;
- Mittel (146) zum Empfangen von Messberichten von dem drahtlosen Gerät gemäß der Messkonfiguration, wobei die Messberichte mindestens einen ersten Wert umfassen;
- Mittel (144) zum Empfangen von decodierten Messberichten, die von dem drahtlosen Gerät an der mindestens einen zweiten Basisstationsvorrichtung empfangen wurden, von der mindestens einen zweiten Basisstationsvorrichtung, unter Verwendung der Kennung, der Messkonfiguration des drahtlosen Geräts, der Messkonfiguration des drahtlosen Geräts und der weiteren auf die Bitübertragungsschicht bezogenen Informationen, welche die Zeit, die Frequenz, die Modulation und die Codierung der Messberichtsübertragung identifizieren;
- Mittel (148) zum Ermitteln, ob eine Bedingung für das Umschalten der Steuerung der drahtlosen Verbindung des drahtlosen Geräts erfüllt ist, unter Verwendung des Messberichts; und
- Mittel (144) zum Senden eines dritten Signals an die mindestens eine zweite Basisstationsvorrichtung und an das drahtlose Gerät, wobei das dritte Signal für das Umschalten der Steuerung der drahtlosen Verbindung des drahtlosen Geräts von der ersten Basisstation zu einer der mindestens zweiten Basisstationsvorrichtungen, wenn die Bedingung für das Umschalten der Steuerung der drahtlosen Verbindung des drahtlosen Geräts verfüllt ist.

11. Basisstationsvorrichtung in einem drahtlosen Kommunikationsnetzwerk, wobei die Basisstationsvorrichtung umfasst:
- Mittel (160) zum Empfangen eines ersten Signals von mindestens einer ersten Basisstationsvorrichtung des drahtlosen Kommunikationsnetzwerks, wobei das erste Signal für eine Kennung eines drahtlosen Geräts des Kommunikationsnetzwerks indikativ ist, und wobei das erste Signal für weitere auf die Bitübertragungsschicht bezogene Informationen, welche die Zeit, die Frequenz, die Modulation und die Codierung der Messberichtsübertragung identifizieren, indikativ ist, wobei das erste Signal für die Messkonfiguration des drahtlosen Geräts indikativ ist;
- Mittel (146) zum Empfangen von von einem drahtlosen Gerät an die erste Basisstation gesendeten Messberichten, unter Verwendung einer Kennung, einer Messkonfiguration des drahtlosen Geräts und weiterer auf die Bitübertragungsschicht bezogene Informationen, welche die Zeit, die Frequenz, die Modulation und die Codierung der Messberichtsübertragung identifizieren,
- Mittel (156) zum Codieren der Messberichte;
- Mittel (160) zum Weiterleiten der decodierten Messberichte an die erste Basisstationsvorrichtung;
- Mittel (160) zum Empfangen eines dritten Signals (138) von der ersten Basisstationsvorrichtung, wobei das dritte Signal für das Umschalten der Steuerung der drahtlosen Verbindung des drahtlosen Geräts von der ersten Basisstation zu der zweiten Basisstationsvorrichtung oder mindestens einer anderen Basisstation, wenn eine Bedingung für das Umschalten der Steuerung der drahtlosen Verbindung des drahtlosen Geräts erfüllt ist;
- Mittel (146) zum Weiterleiten des dritten Signals an das drahtlose Gerät.

## Revendications

1. Procédé de commutation de la commande d'une connexion sans fil d'un dispositif sans fil (106), dans lequel la pluralité de stations de base (104 ; 108) d'un réseau de communication sans fil (100) comprend une première station de base (104) et au moins une deuxième station de base (108), la première station de base commandant la connexion sans fil du dispositif sans fil, le procédé comprenant les étapes suivantes :
- envoyer un premier signal (126) à l'au moins une deuxième station de base du réseau de communication sans fil à partir de la première station de base, le premier signal indiquant un identifiant du dispositif sans fil, une configuration de mesure du dispositif sans fil, et d'autres informations liées à la couche physique identifiant le temps, la fréquence, la modulation et le codage de la transmission de rapport de mesure ;
- envoyer un deuxième signal (127) au dispositif sans fil à partir au moins de la première station de base, le deuxième signal indiquant la configuration de mesure du dispositif sans fil ;
- effectuer des mesures et envoyer des rapports de mesure (116) à partir du dispositif sans fil vers la première station de base conformément à la configuration de mesure, les rapports de mesure comprenant au moins une première valeur;
- recevoir les rapports de mesure à partir du dispositif sans fil par l'au moins une deuxième station de base au moyen de l'identifiant, de la configuration de mesure du dispositif sans fil, et d'autres informations liées à la couche physique identifiant le temps, la fréquence, la modulation et le codage de la transmission de rapport de mesure ;
- décoder des rapports de mesure envoyés à partir du dispositif sans fil vers la première station de base par l'au moins une deuxième station de base ;
- transférer les rapports de mesure décodés (118) reçus par l'au moins une deuxième station de base vers la première station de base ;
- déterminer si une condition pour commuter la commande de la connexion sans fil du dispositif sans fil est remplie en utilisant le rapport de mesure par la première station de base ;
- envoyer un troisième signal (138) à partir de la première station de base vers l'au moins une deuxième station de base et vers le dispositif sans fil, le troisième signal indiquant la commutation de la commande de la connexion sans fil du dispositif sans fil entre la première station de base et la deuxième station de base ou une autre station de base, si la condition pour commuter la commande de la connexion sans fil du dispositif sans fil est remplié ; et
- transférer le troisième signal provenant de la première station de base par l'au moins une deuxième station de base vers le dispositif sans fil.

2. Procédé selon la revendication 1, dans lequel le deuxième signal est envoyé au dispositif sans fil à partir de la première station de base et à partir de l'au moins une deuxième station de base.

3. Procédé selon l'une quelconque des revendications précédentes, dans lequel l'au moins une deuxième station de base transmet le rapport de mesure décodé à la première station de base, seulement si la première valeur du rapport de mesure est supérieure à un premier seuil.

4. Procédé selon l'une quelconque des revendications précédentes, dans lequel la configuration de mesure comprend une périodicité de mesures effectuées par le dispositif sans fil.

5. Procédé selon l'une quelconque des revendications précédentes, dans lequel la configuration de mesure comprend au moins un deuxième seuil.

6. Procédé selon la revendication 5, dans lequel le dispositif sans fil effectue une mesure et envoie un rapport de mesure à la première station de base, si au moins une deuxième valeur du rapport de mesure est supérieure à l'au moins un deuxième seuil.

7. Procédé selon la revendication 6, dans lequel l'au moins un premier seuil et l'au moins un deuxième seuil sont des seuils de qualité de signal et l'au moins une première valeur et l'au moins une deuxième valeur sont des qualités de signal d'au moins une station de base parmi la pluralité de stations de base.

8. Procédé selon la revendication 6, dans lequel l'au moins un premier seuil et l'au moins un deuxième seuil sont des seuils de puissance de signal et l'au moins une première valeur et l'au moins une deuxième valeur sont les puissances de signal d'au moins une stations de base parmi ta pluralité de stations de base.

9. Produit de programme informatique comprenant des instructions exécutables par une machine pour mettre en oeuvre le procédé selon l'une quelconque des revendications 1 à 8 sur une station de base.

10. Appareil de station de base dans un réseau de communication sans fil, l'appareil de station de base comprenant :
- des moyens (144) pour envoyer un premier signal à au moins un deuxième appareil de station de base du réseau de communication sans fil, le premier signal indiquant un identifiant d'un dispositif sans fil du réseau de communication sans fil, le premier signal indiquant d'autres informations liées à la couche physique identifiant le temps, la fréquence, la modulation et le codage de la transmission de rapport de mesure et le premier signal indiquant une configuration de mesure du dispositif sans fil ;
- des moyens (146) pour envoyer un deuxième signal au dispositif sans fil, le deuxième signal indiquant la configuration de mesure du dispositif sans fil ;
- des moyens (146) pour recevoir des rapports de mesure à partir du dispositif sans fil conformément à la configuration de mesure, les rapports de mesure comprenant au moins une première valeur;
- des moyens (144) pour recevoir des rapports de mesure décodés, qui ont été reçus à partir du dispositif sans fil par l'au moins un deuxième appareil de station de base, à partir de l'au moins un deuxième appareil de station de base au moyen de l'identifiant, de la configuration de mesure du dispositif sans fil, et d'autres informations liées à la couche physique identifiant le temps, la fréquence, la modulation et le codage de la transmission de rapport de mesure ;
- des moyens (148) pour déterminer si une condition pour commuter la commande de la connexion sans fil du dispositif sans fil est remplie au moyen du rapport de mesure ; et
- des moyens (144) pour envoyer un troisième signal à l'au moins un deuxième appareil de station de base et au dispositif sans fil, le troisième signal indiquant la commutation de la commande de la connexion sans fil du dispositif sans fil entre l'appareil de station de base et un appareil de l'au moins un deuxième appareil de station de base, si la condition pour commuter la commande de la connexion sans fil du dispositif sans fil est remplie.

11. Appareil de station de base dans un réseau de communication sans fil, l'appareil de station de base comprenant :
- des moyens (160) pour recevoir un premier signal à partir d'au moins un premier appareil de station de base du réseau de communication sans fil, le premier signal indiquant un identifiant d'un dispositif sans fil du réseau de communication sans fil et le premier signal indiquant d'autres informations liées à la couche physique identifiant le temps, la fréquence, la modulation et le codage de la transmission de rapport de mesure, le premier signal indiquant une configuration de mesure du dispositif sans fil ;
- des moyens (146) pour recevoir des rapports de mesure envoyés à partir d'un dispositif sans fil au premier appareil de station de base au moyen d'un identifiant, d'une configuration de mesure du dispositif sans fil, et d'autres informations liées à la couche physique identifiant le temps, la fréquence, la modulation et le codage de la transmission de rapport de mesure ;
- des moyens (156) pour décoder les rapports de mesure ;
- des moyens (160) pour transférer les rapports de mesure décodés vers le premier appareil de station de base ;
- des moyens (160) pour recevoir un troisième signal (138) à partir du premier appareil de station de base, le troisième signal indiquant une commutation de la commande de la connexion sans fil du dispositif sans fil entre le premier appareil de station de base et le deuxième appareil de station de base ou une autre station de base, si une condition pour commuter la commande de la connexion sans fil du dispositif sans fil est remplie ;
- des moyens (146) pour transférer le troisième signal vers le dispositif sans fil.
